# EUROPÄISCHE PATENTANMELDUNG

(11) **EP 3 646 724 A1**
(43) Veröffentlichungstag der Anmeldung: **06.05.2020**
(21) Anmeldenummer: 18401092.4
(22) Anmeldetag: 05.11.2018
(51) Int. Cl.: A01K 97/12

(54) **VERBINDUNGSEINSTELLER FÜR EINE BISSANZEIGE AN EINER ANGELRUTE**

(71) Anmelder: Poseidon-Angelsport OHG, 02627 Radibor (DE)
(72) Erfinder: Buchwald, Tommy, 02627 Radibor (DE)
(74) Vertreter: Haschick, Gerald

(57) **Zusammenfassung**

Die Erfindung betrifft einen Verbindungseinsteller (0) für eine Bissanzeige (11) an einer Angelrute (8), wobei eine Bissanzeige mit einer Angelschnur (12) verbunden ist und eine Verbindung Bissanzeige (5) mit einem Rutenhalter (6) für die Angelrute vorhanden ist, wobei verhindert werden soll, dass bei Freigabe der Bissanzeige ein geregelter Auffang der Verbindung der Bissanzeige stattfindet.

## Beschreibung

Die Erfindung betrifft einen Verbindungseinsteller für eine Bissanzeige an einer Angelrute, wobei eine Bissanzeige mit der Angelschnur verbunden ist und eine Verbindung einer Bissanzeige mit einem Rutenhalter für die Angelrute vorhanden ist, wobei verhindert werden soll, dass bei Freigabe der Bissanzeige ein geregelter Auffang der Verbindung der Bissanzeige stattfindet.

Aus dem Stand der Technik heraus sind verschiedene Bissanzeigen bekannt, welche mit der Angelsehne der Angelrute verbunden und über eine Verbindung mittels Schnur, Kette, Draht usw. mit einem Rutenhalter gegeben sind, wobei bei einer Bissanzeige die Verbindung zwischen Angelschnur und Bissanzeiger getrennt wird und die Bissanzeige über ihre Verbindung zur Angelrute hin auslöst.

Nachteilig bei dieser technischen Lösung ist dabei, dass die Verbindung zwischen Rutenhalter und Bissanzeige in Form einer Kette, einer Schnur, eines Drahtes etc. sich verklemmt durch das unkontrollierte Auslösen der Bissanzeige und dass sich somit Fehlalarme bzw. andere technische Effekte hervortun.

Die Aufgabe der Erfindung ist es, einen Verbindungseinsteller für eine Bissanzeige an einer Angelrute zu realisieren, womit die Nachteile des Standes der Technik ausgeglichen werden und durch eine mechanische Anordnung eine genaue Positionierung der Bissanzeige mit dem Verbindungselement hin zum Rutenhalter ausgeführt wird.

Die Aufgabe wird dadurch gelöst, dass der Patentanspruch 1 in seiner technischen Ausführung realisiert wird.

Dabei wurde ein Verbindungseinsteller für eine Bissanzeige an einer Angelrute, wobei eine Bissanzeige mit der Angelschnur verbunden und eine Verbindung Bissanzeige zu einem Rutenhalter gegeben sind, so entwickelt,
- dass ein Verbindungseinsteller aus einem Arm besteht und ein Umlenker variabel in seiner Höhe an dem Arm verstellbar und der Arm an einem Rutenhalter befestigt ist.

Mit dem Verbindungseinsteller kann man das Auslösen eines Hangers und/oder Bobbins und/oder Pendelbissanzeigers präzise einstellen. Dies wird durch das Umlenken der Verbindung in Form einer Kette, Schnur oder eines anderen Verbindungselementes des Hangers, Bobbins oder Pendelbissanzeigers erreicht. Die Verbindung in Form einer Kette oder Schnur der Bissanzeige hin zum Rutenhalter wird durch ein entsprechend großen Umlenker geführt, der wiederum höhenverstellbar an einem Arm befestigt ist. Der Umlenker lässt sich am Arm nach oben und unten verschieben und an der gewünschten Stelle fixieren. Dadurch werden der Umlenkpunkt und die maximal zu erreichende Höhe des Hangers, Bobbins oder Pendelbissanzeigers festgelegt. Der Arm wird unter dem Rutenhalter vorn oder der Bissanzeige oder in unmittelbarer Nähe des entsprechenden Hangers, Bobbins bzw. Pendelbissanzeigers befestigt.

Die Vorteile der technischen Lösung ergeben sich daraus, dass die Fallhöhe des Hangers, Bobbins oder Pendelbissanzeigers durch die Freigabe der Schnur deutlich reduziert wird.

Ein Anschlagen des Hangers, Bobbins oder Pendelbissanzeigers gegen die akustische Bissanzeige wird mit der richtigen Höhe über die Einstellung des Umlenkpunktes verhindert.

Der Hanger, Bobbin oder Pendelbissanzeiger kann bei entsprechender Höheneinstellung allein durch den Schnurdruck auslösen und muss nicht erst durch die Aufnahme der Angelrute ausgelöst werden.

Ein Verklemmen der Verbindung in Form einer Kette, einer Schnur, eines Drahtes usw. des Hangers, Bobbins oder Pendelbissanzeigers in der akustischen Bissanzeige wird verhindert, da bei richtiger Einstellung die zu erreichende Höhe des Hangers, Bobbins oder Pendelbissanzeigers nicht über die akustische Bissanzeige reicht.

Die Erfindung wird nachfolgend an einem Ausführungsbeispiel erläutert, wobei die Figuren 1 bis 7 gegeben sind.

Es zeigen die:
- Figur 1: die schematische Darstellung des Verbindungseinstellers,
- Figur 2: die Seitenansicht Arm,
- Figur 3: die Draufsicht Arm,
- Figur 4: die Seitenansicht Umlenker,
- Figur 5: die Draufsicht Umlenker,
- Figur 6: die Rückenansicht Umlenker,
- Figur 7: die schematische Darstellung der Anwendung des Verbindungseinstellers.

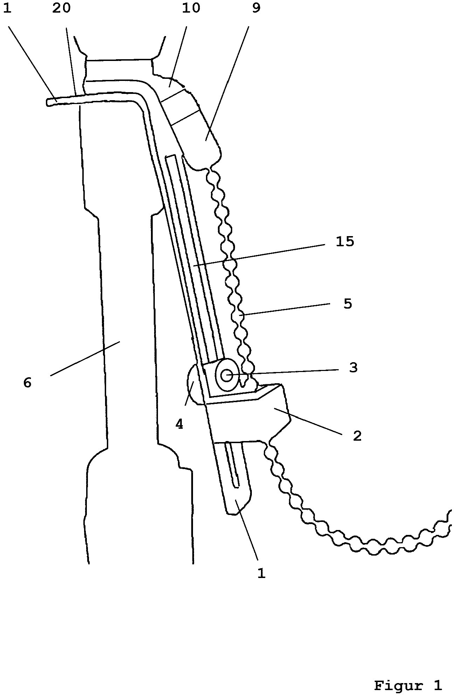

Aus der Figur 1 und den Figuren 2, 3, 4, 5 und 6 ist die schematische Darstellung des Verbindungseinstellers gemäß der erfinderischen Beschreibung ersichtlich.

Dabei ist ein Rutenhalter 6 für eine Angelrute 8 gegeben. An diesem Rutenhalter 6 ist eine Befestigung Bissanzeige 10 in Verbindung mit einem Adapter als, Gegenstück Befestigung 10, 9 und der nachfolgenden Verbindung Bissanzeige 5 in Form einer Kette gegeben.

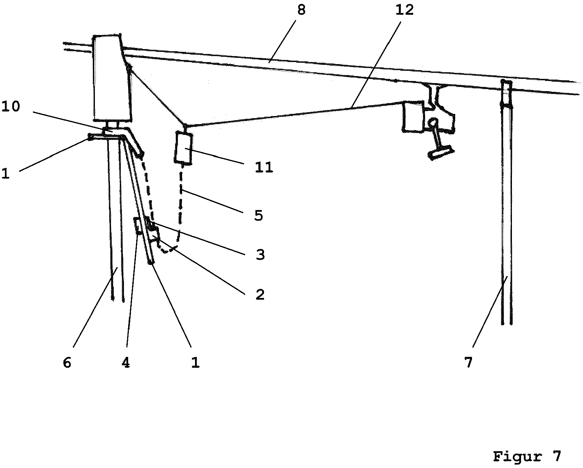

Wie aus der Figur 7 ersichtlich, ist die Verbindung Bissanzeige 5 mit einer Bissanzeige 11, welche mit einer Angelschnur 12 verbunden ist, vorhanden. Die Verbindung Bissanzeige 5, in diesem Fall eine Kette, was aber auch aus einem anderen Material wie einer Schnur, einem Draht usw. in Verbindung mit dem, Gegenstück Befestigung 10, 9 vorhanden sein kann, wird durch einen Umlenker 2, welcher an einem Arm 1 des Verbindungseinstellers 0 vorhanden ist, durchgefädelt. Durch diesen Umlenker 2 am Arm 1 ist jetzt hier eine Höhe einstellbar, um beim Auslösen der Bissanzeige 11 in Verbindung mit der Angelschnur 12 ein geregeltes, platziertes Ausklinken zu gewährleisten, um eine Verankerung, Beschädigung bzw. Verknotung zu verhindern. Dabei ist der Arm 1 des Verbindungseinstellers 0 unmittelbar in der Nähe der Befestigung Bissanzeige 10 am Rutenhalter 6 gegeben. Durch das Einfädeln der Verbindung Bissanzeige 5 in den Umlenker 2, welcher über eine, Arretierung Umlenker am Arm 1, 3 und der, Feststellung Arretierung an 3, 4 am Arm 1 vorhanden ist, lässt sich die Höhe einstellen. Dabei ist eine Aussparung 15 im Arm 1 gegeben.

Über die Nut 13 des Umlenkers 2 wird der Umlenker 2 in der Aussparung 15 geführt. Über die, Feststellung Arretierung an 3, 4 kann die Höhe festgelegt werden. Damit ist es möglich, den Umlenker 2 in der Höhe so zu platzieren, wie er für die erforderliche Bissanzeige, insbesondere für die Umlenkung in Verbindung Bissanzeige 5, notwendig ist. Der Arm 1 ist in seiner Form so gegeben, dass er von dem Rutenhalter 6 leicht schräg absteht. An dem Umlenker 2 ist aus seiner Rückenansicht zu sehen, dass eine Bohrung 14 im Umlenker 2 vorhanden ist, welche die, Arretierung Umlenker am Arm 1, 3 und die, Feststellung Arretierung an 3, 4 möglich macht.

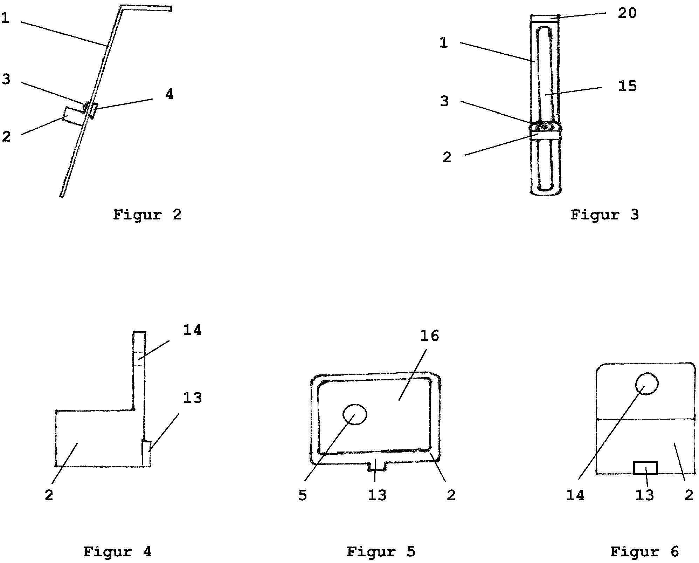

Wenn man die Figur 5 betrachtet und als Draufsicht des Umlenkers 2 sieht, ist es vorteilhaft, wenn eine, Öffnung des Umlenkers 2, 16 gegeben ist, um die Verbindung Bissanzeige 5 einzufädeln.

Aus der Figur 7 heraus ist die schematische Darstellung der Anwendung der Verbindungseinstellung für eine Bissanzeige 11 ersichtlich. Wie man erkennen kann, sind ein Rutenhalter 6 und ein hinterer Rutenhalter 7 gegeben, worüber eine Angelrute 8 vorhanden ist. In Verbindung mit der Angelschnur 12 und der Bissanzeige 11 wird nun die vorhandene Verbindung Bissanzeige 5 durch den Umlenker 2 des Verbindungseinstellers 0 geführt. Durch die Höheneinstellung über die Positionen 4 und 3 ist es möglich, beim Auslösen der jeweiligen Bissanzeige ein kontrolliertes Umlenken der Verbindung Bissanzeige 5 zu generieren.

Aus der Figur 7 ist auch ersichtlich, dass eine unmittelbare Befestigung des Arms 1 des Verbindungseinstellers 0 in der Nähe oder direkt neben der handelsüblichen Bissanzeige mit der Befestigung Bissanzeige 10 und der Verbindung Bissanzeige 5 hin zur Bissanzeige 11 des Gesamtpaketes stattfindet.

### Bezugszeichen

- 0: Verbindungseinsteller
- 1: Arm
- 2: Umlenker
- 3: Arretierung Umlenker am Arm 1
- 4: Feststellung Arretierung an 3
- 5: Verbindung Bissanzeige
- 6: Rutenhalter
- 7: Rutenhalter hinten
- 8: Angelrute
- 9: Gegenstück Befestigung 10
- 10: Befestigung Bissanzeige am Rutenhalter 6
- 11: Bissanzeige
- 12: Angelschnur
- 13: Nut Umlenker
- 14: Bohrung im Umlenker 2
- 15: Aussparung
- 16: Öffnung Umlenker 2
- 20: Oberteil Arm

## Patentansprüche

1. Verbindungseinsteller für eine Bissanzeige an einer Angelrute, wobei eine Bissanzeige mit der Angelschnur verbunden und eine Verbindung Bissanzeige zu einem Rutenhalter gegeben sind, **dadurch gekennzeichnet, dass** ein Verbindungseinsteller aus einem Arm (1) besteht und ein Umlenker (2) variabel in seiner Höhe an dem Arm (1) verstellbar und der Arm (1) an einem Rutenhalter (6) befestigt ist.
